# EUROPÄISCHE PATENTSCHRIFT

(11) **EP 2 692 394 B1**
(45) Veröffentlichungstag und Bekanntmachung des Hinweises auf die Patenterteilung: **16.08.2017**
(21) Anmeldenummer: 12178516.6
(22) Anmeldetag: 30.07.2012
(51) Int. Cl.: A63B 29/02, G01S 5/02

(54) **Suchgerät und Verfahren zum Betreiben eines Suchgeräts**
Search apparatus and method for operating a searching apparatus
Appareil de recherche et un procédé de fonctionnement d'un appareil de recherche

(43) Veröffentlichungstag der Anmeldung: 05.02.2014
(73) Patentinhaber: Ortovox Sportartikel GmbH, 82024 Taufkirchen (DE)
(72) Erfinder: Matzner, Rolf, 80639 München (DE); Hruscák, Cyril, 86911 Dießen (DE)
(74) Vertreter: Hofstetter, Schurack & Partner

(56) Entgegenhaltungen:
- EP-A1- 1 577 679
- EP-A1- 1 746 433
- EP-A2- 1 439 400
- DE-A1- 19 831 421
- US-A1- 2005 151 662

## Beschreibung

Die vorliegende Erfindung betrifft ein Suchgerät, insbesondere ein Lawinen-Verschütteten-Suchgerät, mit einer Empfangsvorrichtung, die mindestens eine Suchantenne zum Empfangen mindestens eines ersten Sendesignals eines ersten Senders und eines zweiten Sendesignals eines zweiten Senders umfasst, wobei sich das erste und das zweite Sendesignal in mindestens einem signalbestimmenden Parameter voneinander unterscheiden, einer Verarbeitungsvorrichtung, die mit der Empfangsvorrichtung gekoppelt und ausgelegt ist, durch Auswertung des mindestens einen signalbestimmenden Parameters das erste Sendesignal dem ersten Sender und das zweite Sendesignal dem zweiten Sender zuzuordnen, wobei die Verarbeitungsvorrichtung weiterhin ausgelegt ist, eine Entfernung zwischen dem Suchgerät und mindestens einem der Sender zu ermitteln, und einer Signalisierungsvorrichtung, die mit der Verarbeitungsvorrichtung gekoppelt und ausgelegt ist, Information zur Unterstützung der Suche zumindest eines aktuell zur Suche ausgewählten Senders abzugeben. Sie betrifft überdies ein Verfahren zum Betreiben eines entsprechenden Suchgeräts. Ein entsprechendes Lawinen-Verschütteten-Suchgerät sowie ein entsprechendes Verfahren sind bekannt aus der US 2005/0151662 A1.

Wenngleich ein erfindungsgemäßes Suchgerät in verschiedenen Situationen eingesetzt werden kann, so wird es im Nachfolgenden der leichteren Verständlichkeit wegen am Beispiel von Lawinen-Verschütteten vorgestellt.

Üblicherweise läuft die Suche nach Lawinen-Verschütteten in vier Phasen ab: In einer ersten Phase findet eine Signalsuche bis zum Empfang eines Signals statt. In einer sich daran anschließenden zweiten Phase wird eine Grobsuche bis in die Nähe des Verschütteten durchgeführt, d.h. bis etwa 3m Abstand vom Verschütteten. Daran schließt sich als dritte Phase eine Feinsuche zur bestmöglichen Bestimmung der senkrechten Projektion des Orts des Verschütteten auf die Schneeoberfläche an. Schließlich wird in einer vierten Phase eine Punktortung mit einer Sonde zur taktilen Bestätigung des Suchergebnisses durchgeführt.

Die Führung des Suchenden durch das Lawinen-Verschütteten-Suchgerät zum Sender erfolgt dabei in der Regel durch eine Richtungs- und Entfernungsanzeige. Typische moderne Lawinen-Verschütteten-Suchgeräte sind in diesem Zusammenhang beispielsweise in der Europäischen Patentanmeldung 11 182 732.5 sowie in der EP 2 065 722 A1 näher beschrieben. Der Suchende folgt dem Richtungspfeil und passt seine Gehgeschwindigkeit der verbleibenden Entfernung zum Ziel an. Im Bereich der Feinortung wird üblicherweise die Richtungsanzeige abgeschaltet und der Suchende bewegt sich kreuzweise, bis er den Punkt mit der minimalen Entfernungsanzeige festgestellt hat. Dies ist in aller Regel die senkrechte Projektion des Orts des Verschütteten auf die Schneeoberfläche.

Sind mehrere Suchziele verschüttet, so sollte das erste geortet und sondiert und sodann die Suche nach dem zweiten fortgesetzt werden, und so weiter.

Lawinen-Verschütteten-Suchgeräte nach dem Stand der Technik können die Signale der Sender mehrerer Verschütteter voneinander trennen. Die Zuordnung eines empfangenen Signals zu einem bestimmten Sender wird dabei anhand einer Signatur vorgenommen, die aus einer beliebigen Auswahl signalbestimmender Parameter, wie beispielsweise Periodendauer, Duty-Cycle, Trägerfrequenz, Ein-/Ausschaltverhalten, zusammengesetzt sein kann. In diesem Zusammenhang wird verwiesen auf die EP 1 439 400 A2, die zur Senderzuordnung die gesamte Periodendauer, die Sendezeit, die Pausendauer, die Amplitude oder die Sendefrequenz vorschlägt.

Nach dem Stand der Technik betätigt der Suchende nach erfolgreicher Punktortung eine Taste oder andere Vorrichtung am Suchgerät, damit dieses den georteten Sender als gefunden markiert und die Display-Anzeige so umschaltet, dass der Suchende nunmehr zum nächsten, noch nicht als gefunden markierten Sender geführt wird.

Diese Vorgehensweise stellt sich bisweilen, insbesondere für ungeübte Suchende vor allem auch in Anbetracht der Aufregung bei einem realen Suchvorgang als zeitraubend und für Fehlbedienung anfällig heraus, was insbesondere in Anbetracht der lebensbedrohlichen Situation der Verschütteten unerwünscht ist.

Die US 2005/0151662 A1 betrifft ein Lawinen-Verschütteten-Suchgerät, das ausgelegt ist, unter Verwendung der Signalstärke, der Entfernung und/oder von Orientierungsinformation eines verschütteten Senders die Position des Verschütteten zu lokalisieren. Dieses Lawinen-Verschütteten-Suchgerät ist in verschiedenen Modi betreibbar. In einem "Auto"-Modus werden Hinweise für alle Sender im breitesten Suchgebiet angezeigt. Auf der Basis dieser Anzeige werden dann nacheinander die Verschütteten geborgen. Bei mehreren Verschütteten sind weitere Modi verfügbar. In einem "Forward"-Modus wird lediglich das stärkste Signal angezeigt. Eine Umschaltung auf einen anderen Sender erfolgt in Abhängigkeit der Sendesignalstärke. In einem "Scan"-Modus führt das System zyklisch durch alle möglichen Bereiche und zeigt Hinweise für innerhalb eines aktuellen Bereichs isolierte Signale an. In einem "Seek"-Modus kann manuell ein bestimmtes Signal ausgewählt werden, bis manuell auf ein anderes Signal umgeschaltet wird. In einem "Forward narrow"-Modus ist die Suche auf einen bestimmten Winkelbereich eingeschränkt, während in einem "Manual"-Modus die Suche auf bestimmte Bereiche oder Untergruppen von Bereichen eingeschränkt werden kann.

Die Aufgabe der vorliegenden Erfindung besteht deshalb darin, ein eingangs genanntes Suchgerät bzw. ein eingangs genanntes Verfahren derart weiter zu bilden, dass die Überlebenswahrscheinlichkeit Verschütteter verbessert werden kann.

Diese Aufgabe wird gelöst durch ein Suchgerät mit den Merkmalen von Patentanspruch 1 sowie durch ein Verfahren mit den Merkmalen von Patentanspruch 17.

Der vorliegenden Erfindung liegt die Erkenntnis zugrunde, dass die Überlebenswahrscheinlichkeit Verschütteter erhöht werden kann, wenn der Suchvorgang bei mehreren Verschütteten vereinfacht wird, insbesondere so, dass die Anzahl möglicher Bedienfehler weiter reduziert wird.

Erfindungsgemäß findet eine Vereinfachung dadurch statt, dass die Verarbeitungsvorrichtung des Suchgeräts ausgelegt ist, eine Umschaltung auf einen anderen Sender als den aktuell zur Suche ausgewählten Sender zumindest zu initiieren, falls die Verarbeitungsvorrichtung erkennt, dass sich das Suchgerät vom aktuell zur Suche ausgewählten Sender entfernt. Dies eröffnet die Möglichkeit einer halbautomatischen oder einer automatischen Umschaltung auf den nächsten Verschütteten bei mehreren Verschütteten. Auf diese Weise kann auch bei der großen Nervosität des Suchenden im Notfall eine Fehlbedienung nahezu zuverlässig ausgeschlossen werden. Auf diese Weise wird der Zeitraum bis zur Bergung der weiteren Verschütteten deutlich verkürzt, umso mehr, je mehr Verschüttete zu bergen sind. Dadurch wird die Überlebenswahrscheinlichkeit der Verschütteten, insbesondere des zuletzt zu bergenden Verschütteten, signifikant erhöht.

Bei einer bevorzugten Ausführungsform ist die Verarbeitungsvorrichtung weiterhin ausgelegt, ein Entfernen des Suchgeräts vom aktuell zur Suche ausgewählten Sender dann anzunehmen, wenn die ermittelte Entfernung zunächst eine erste vorgebbare Entfernungsschwelle unterschritten und danach eine zweite vorgebbare Entfernungsschwelle überschritten hat. Dies tritt grundsätzlich auf, wenn der Suchende sich zunächst zum Verschütteten zu bewegt hat und dann wieder vom Verschütteten weg. Dabei nimmt das Suchgerät an, dass die Entfernung vom Verschütteten absichtlich erfolgt, nämlich weil er geortet und seine genaue Lage markiert wurde.

Dabei kann die Verarbeitungsvorrichtung ausgelegt sein, ein Entfernen des Suchgeräts vom aktuell zur Suche ausgewählten Sender nur dann anzunehmen, wenn zwischen dem Unterschreiten der ersten vorgebbaren Entfernungsschwelle und dem Überschreiten der zweiten vorgebbaren Entfernungsschwelle eine vorgebbare Zeitdauer überschritten wurde. Dies berücksichtigt, dass zur Feinortung und/oder Punktortung (Sondierung) des Verschütteten eine bestimmte Zeitdauer benötigt wird. Durch diese Vorgehensweise kann die Interpretation eines zufälligen Entfernens vom Verschütteten als absichtliches Entfernen nach Bergung des Verschütteten zuverlässig ausgeschlossen werden. Diese Maßnahme verhindert überdies eine Fehlinterpretation, falls der Suchende in seiner Eile und Aufregung durch schnelles Laufen über den Verschütteten hinweg laufen würde, ohne dass dieser vorher geborgen worden wäre.

Die Verarbeitungsvorrichtung kann weiterhin ausgelegt sein, ein Entfernen des Suchgeräts vom aktuell zur Suche ausgewählten Sender dann anzunehmen, wenn beim Entfernen des Suchgeräts vom aktuell zur Suche ausgewählten Sender weiterhin ein vorgebbarer Distanzschwellwert einer am Stück zurückzulegenden Distanz weg vom aktuell zur Suche ausgewählten Sender überschritten wird. Durch diese Maßnahme kann eine Fehlinterpretation kurzfristiger Hin- und Herbewegungen, beispielsweise während der Feinsuche, ausgeschlossen werden.

Bevorzugt ist das Suchgerät weiter ausgelegt, den Ort des aktuell zur Suche ausgewählten Senders relativ zum Suchgerät zu ermitteln, wobei die Verarbeitungsvorrichtung ausgelegt ist, die Entfernung des Suchgeräts von der senkrechten Projektion des aktuell zur Suche ausgewählten Senders auf eine Oberfläche, insbesondere eine Schneeoberfläche, zu ermitteln. Auf diese Weise wird besonders präzise die Entfernung zwischen Suchgerät und aktuell zur Suche ausgewähltem Sender ermittelt. In diesem Zusammenhang wird verwiesen auf die Europäische Patentanmeldung 11 182 732.5 sowie die EP 2 065 722 A1.

Die Verarbeitungsvorrichtung kann ausgelegt sein, im Rahmen der Initiierung der Umschaltung auf einen anderen Sender die Umschaltung auf den anderen Sender automatisch vorzunehmen. Auf diese Weise ist keinerlei Eingreifen des Suchenden zur Umschaltung auf den anderen Sender nötig, Fehlbedienungen sind völlig ausgeschlossen.

Dabei kann die Verarbeitungsvorrichtung weiterhin ausgelegt sein, im Rahmen der Initiierung der Umschaltung auf den anderen Sender den aktuell zur Suche ausgewählten Sender als gefunden zu markieren. Dadurch wird verhindert, dass nochmals versehentlich nach einem bereits georteten Verschütteten gesucht wird, wodurch zusätzliche Zeit für die Bergung noch Verschütteter verloren ginge.

Die Verarbeitungsvorrichtung kann in diesem Zusammenhang weiterhin ausgelegt sein, im Rahmen der Initiierung der Umschaltung auf den anderen Sender die mit der Signalisierungsvorrichtung abgegebene Information zur Unterstützung der Suche auf den anderen Sender umzuschalten. Dadurch wird besonders zeiteffektiv die Suche nach dem nächsten Verschütteten eingeleitet, sodass insbesondere bei mehreren Verschütteten ein deutlicher Zeitgewinn bis zur Bergung des letzten Verschütteten erzielt werden kann.

Alternativ zur automatischen Umschaltung auf den nächsten Verschütteten kann die Verarbeitungsvorrichtung auch ausgelegt sein, eine manuelle Umschaltung durch den Suchenden durch Abgabe eines entsprechenden Hinweises durch die Signalisierungsvorrichtung zu initiieren, d.h. also eine halbautomatische Umschaltung vorzunehmen. Der Hinweis an den Suchenden kann darin bestehen, dass die Signalisierungsvorrichtung eine Aufforderung zur manuellen Umschaltung durch den Suchenden abgibt. Bevorzugt besteht die Aufforderung darin, eine Bedienvorrichtung an dem Suchgerät zu betätigen. Dabei kann die Verarbeitungsvorrichtung ausgelegt sein, bei Bestätigung der Aufforderung durch den Suchenden den aktuell zur Suche ausgewählten Sender als gefunden zu markieren und/oder die von der Signalisierungsvorrichtung abgegebene Information zur Unterstützung der Suche auf einen anderen Sender umzuschalten.

Die Verarbeitungsvorrichtung kann weiterhin ausgelegt sein, bei Ablehnung der Aufforderung durch den Suchenden keine Umschaltung auf einen anderen Sender vorzunehmen. Bevorzugt wird dann von der Signalisierungsvorrichtung weiterhin Information zur Unterstützung der Suche zumindest des aktuell zur Suche ausgewählten Senders abgegeben.

Die von der Signalisierungsvorrichtung abgegebene Information kann insbesondere die Entfernung des Suchgeräts zum aktuell zur Suche ausgewählten Sender und/oder die Richtung zum aktuell zur Suche ausgewählten Sender umfassen.

In der Verarbeitungsvorrichtung kann eine Reihenfolge von Sendern abgelegt sein, wobei die Verarbeitungsvorrichtung ausgelegt sein kann, bei einem Umschalten auf den nächsten Sender der Reihenfolge von Sendern umzuschalten. Dadurch muss sich nicht der Suchende Gedanken darüber machen, welchen Verschütteten er als nächsten bergen wird. Dies resultiert in einer weiteren Zeitersparnis. Dabei kann die Verarbeitungsvorrichtung ausgelegt sein, eine Reihenfolge von Sendern festzulegen, insbesondere in Abhängigkeit der Entfernung der jeweiligen Sender vom Suchgerät und/oder von der Empfangsfeldstärke des vom jeweiligen Sender ausgesendeten Sendesignals. Durch diese Vorgehensweise stellt die von der Verarbeitungsvorrichtung festgelegte Reihenfolge sicher, dass möglichst viele Verschüttete lebend geborgen werden können.

Die Signalisierungsvorrichtung kann ausgelegt sein, die jeweilige Information optisch, akustisch und/oder haptisch abzugeben. Im Falle der optischen Abgabe umfasst die Signalisierungsvorrichtung insbesondere eine Anzeigevorrichtung, im Falle der akustischen Abgabe einen Lautsprecher und im Falle der haptischen Abgabe beispielsweise einen Vibrationsgeber.

Weitere bevorzugte Ausführungsformen ergeben sich aus den Unteransprüchen.

Die mit Bezug auf das erfindungsgemäße Suchgerät vorgestellten bevorzugten Ausführungsformen und deren Vorteile gelten entsprechend, soweit anwendbar, für das erfindungsgemäße Verfahren.

Im Nachfolgenden wird nunmehr ein Ausführungsbeispiel der vorliegenden Erfindung unter Bezugnahme auf die beigefügten Zeichnungen näher beschrieben. Es zeigen:
- Figur 1: in schematischer Darstellung die Situation eines mit einem erfindungsgemäßen Suchgerät ausgestatteten Suchenden sowie beispielhaft zwei Verschütteten;
- Figur 2: in schematischer Darstellung den Aufbau eines erfindungsgemäßen Suchgeräts; und
- Figur 3: in schematischer Darstellung das Suchgerät von Fig. 1 mit detaillierterer Anzeige.

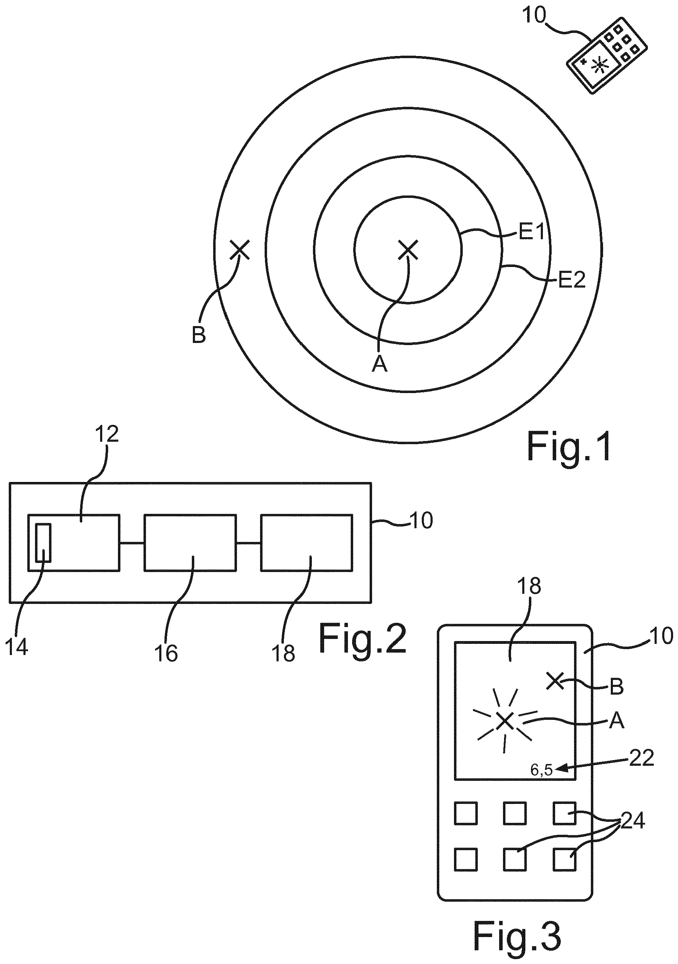

Fig. 1 zeigt in schematischer Darstellung die Situation bei der Bergung zweier Verschütteter A, B mit einem erfindungsgemäßen Suchgerät 10. Gemäß Fig. 2 umfasst das erfindungsgemäße Suchgerät eine Empfangsvorrichtung 12, die mindestens eine Suchantenne 14 zum Empfangen mindestens eines ersten und eines zweiten Sendesignals umfasst, die sich in mindestens einem signalbestimmenden Parameter voneinander unterscheiden. Das Suchgerät 10 umfasst weiterhin eine Verarbeitungsvorrichtung 16, die mit der Empfangsvorrichtung 12 gekoppelt und ausgelegt ist, durch Auswertung des mindestens einen signalbestimmenden Parameters das erste Sendesignal einem ersten Sender A und das zweite Sendesignal einem zweiten Sender B zuzuordnen, wobei die Verarbeitungsvorrichtung 16 weiterhin ausgelegt ist, eine Entfernung zwischen dem Suchgerät 10 und mindestens einem Sender A, B zu ermitteln. Weiterhin umfasst das Suchgerät 10 eine Signalisierungsvorrichtung 18, die mit der Verarbeitungsvorrichtung 16 gekoppelt und ausgelegt ist, Information zur Unterstützung der Suche zumindest eines aktuell zur Suche ausgewählten Senders abzugeben. Vorliegend ist die Signalisierungsvorrichtung 18 als eine Anzeigevorrichtung bzw. ein Display ausgeführt.

Die Verarbeitungsvorrichtung 16 ist vorliegend ausgelegt, eine Reihenfolge von Sendern festzulegen in Abhängigkeit der Entfernung der jeweiligen Sender vom Suchgerät 10. Mit Bezug auf Fig. 1 ist der Sender B weiter entfernt als der Sender A. Insofern hat die Verarbeitungsvorrichtung 16 des Suchgeräts 10 die Reihenfolge A, B festgelegt. Der aktuell zur Suche ausgewählte Sender ist demnach der Sender A.

Erfindungsgemäß ist die Verarbeitungsvorrichtung 16 des Suchgeräts 10 ausgelegt, zu prüfen, ob sich das Suchgerät 10 vom aktuell zur Suche ausgewählten Sender A entfernt. Falls diese Prüfung positiv ausfällt, initiiert die Verarbeitungsvorrichtung 16 eine Umschaltung auf den Sender B, d.h. der Sender B wird zum aktuell ausgewählten Sender.

Eine Entfernung des Suchgeräts 10 vom Sender A wird dann angenommen, wenn zunächst eine erste vorgebbare Entfernungsschwelle E1 unterschritten und danach eine zweite vorgebbare Entfernungsschwelle E2 überschritten wurde. Die Verarbeitungsvorrichtung 16 ist weiterhin ausgelegt, zu prüfen, ob zwischen dem Unterschreiten der Entfernungsschwelle E1 und dem anschließenden Überschreiten der Entfernungsschwelle E2 eine vorgebbare Zeitdauer verstrichen ist. Dies trägt dem Umstand Rechnung, dass für die Bergung des Verschütteten A eine gewisse Zeitdauer vergeht. Überläuft der Suchende in seiner Aufregung zufällig den Verschütteten A, würde er auch zunächst eine Entfernungsschwelle E1 unterschreiten und anschließend die Entfernungsschwelle E2 überschreiten, obwohl er den Verschütteten A nicht geborgen hat.

Die Verarbeitungsvorrichtung 16 ist weiterhin ausgelegt, zu prüfen, ob bei der Entfernung des Suchgeräts vom Sender A ein vorgebbarer Distanzschwellwert einer am Stück zurückzulegenden Distanz weg vom Sender A überschritten wurde. Dadurch wird verhindert, dass insbesondere bei der Feinsuche kurzfristige Hin- und Herbewegungen zu einer Fehlinterpretation führen.

Mit der Formulierung, dass die Verarbeitungsvorrichtung 16 eine Umschaltung auf den nächsten Sender "zumindest initiiert", soll zum Ausdruck gebracht werden, dass diese Umschaltung vollautomatisch erfolgen kann oder halbautomatisch, d.h. dass ein Hinweis an den Suchenden erfolgt, der dann die Umschaltung manuell vornehmen muss.

Fig. 3 zeigt das Suchgerät von Fig. 1 in detaillierterer schematischer Darstellung. Es sind die beiden Sender A und B zu erkennen, wobei dargestellt ist, dass der Sender A blinkt, um zu verstehen zu geben, dass es sich um den aktuell zur Suche ausgewählten Sender handelt. In einem Dialogfenster 18 des Suchgeräts 10 wird Information zur Unterstützung der Suche des aktuell zur Suche ausgewählten Senders abgegeben, insbesondere durch die zweidimensionale Darstellung des Suchfelds, in das die Orte der Verschütteten eingezeichnet sind, sowie einer Entfernungsangabe 22 zum aktuell zur Suche ausgewählten Sender A. Das Suchgerät 10 umfasst eine Vielzahl von Bedienknöpfen 24, wobei vorgesehen sein kann, dass im Falle der manuellen Umschaltung durch den Suchenden auf der Anzeigevorrichtung 18 ein entsprechender Hinweis ergeht, wobei der Suchende zur Bestätigung der Aufforderung eines der Bedienelemente 24 drücken muss, um eine Umschaltung auf den nächsten Suchenden zu bewirken bzw. den aktuell zur Suche ausgewählten Sender als gefunden zu markieren. Die Anzeige 18 blendet daraufhin den Sender A aus und schaltet um zur Abgabe von Information zur Unterstützung der Suche des Senders B.

Bevorzugt ist das Suchgerät 10 ausgebildet, die Entfernung des Suchgeräts 10 von der senkrechten Projektion des aktuell zur Suche ausgewählten Senders auf eine Oberfläche, insbesondere eine Schneeoberfläche, zu ermitteln. Im Suchgerät 10 wird dann diese Entfernung wie oben angegeben verarbeitet.

Alternativ oder zusätzlich zu einer Anzeigevorrichtung 18 kann die Suche durch Abgabe eines akustischen Signals oder eines haptischen Signals und/oder eines optischen Signals unterstützt werden. Lehnt der Suchende im Falle der halbautomatischen Umschaltung, d.h. die Bedienperson muss manuell umschalten, die Umschaltung ab, so werden weiterhin Entfernung und gegebenenfalls Richtung des aktuell zur Suche ausgewählten Senders auf der Anzeigevorrichtung 18 angezeigt.

## Patentansprüche

1. Suchgerät (10), insbesondere Lawinen-Verschütteten-Suchgerät, mit
- einer Empfangsvorrichtung (12), die mindestens eine Suchantenne (14) zum Empfangen mindestens eines ersten Sendesignals eines ersten Senders (A) und eines zweiten Sendesignals eines zweiten Senders (B) umfasst, wobei sich das erste und das zweite Sendesignal in mindestens einem signalbestimmenden Parameter voneinander unterscheiden;
- einer Verarbeitungsvorrichtung (16), die mit der Empfangsvorrichtung (12) gekoppelt und ausgelegt ist, durch Auswertung des mindestens einen signalbestimmenden Parameters das erste Sendesignal dem ersten Sender (A) und das zweite Sendesignal dem zweiten Sender (B) zuzuordnen, wobei die Verarbeitungsvorrichtung (16) weiterhin ausgelegt ist, eine Entfernung zwischen dem Suchgerät (10) und mindestens einem der Sender zu ermitteln; und
- einer Signalisierungsvorrichtung (18), die mit der Verarbeitungsvorrichtung (16) gekoppelt und ausgelegt ist, Information zur Unterstützung der Suche zumindest eines aktuell zur Suche ausgewählten Senders (A) abzugeben;
**dadurch gekennzeichnet,**
**dass** die Verarbeitungsvorrichtung (16) ausgelegt ist, zu prüfen, ob sich das Suchgerät (10) vom aktuell zur Suche ausgewählten Sender (A) entfernt;
wobei die Verarbeitungsvorrichtung (16) weiterhin ausgelegt ist, eine Umschaltung auf einen anderen Sender (B) als den aktuell zur Suche ausgewählten Sender (A) zumindest zu initiieren, falls diese Prüfung positiv ausfällt.

2. Suchgerät (10) nach Anspruch 1,
**dadurch gekennzeichnet,**
**dass** die Verarbeitungsvorrichtung (16) weiterhin ausgelegt ist, ein Entfernen des Suchgeräts (10) vom aktuell zur Suche ausgewählten Sender (A) dann festzustellen, wenn die ermittelte Entfernung zunächst eine erste vorgebbare Entfernungsschwelle (E1) unterschritten und danach eine zweite vorgebbare Entfernungsschwelle (E2) überschritten hat.

3. Suchgerät (10) nach Anspruch 2,
**dadurch gekennzeichnet,**
**dass** die Verarbeitungsvorrichtung (16) ausgelegt ist, ein Entfernen des Suchgeräts (10) vom aktuell zur Suche ausgewählten Sender (A) nur dann festzustellen, wenn zwischen dem Unterschreiten der ersten vorgebbaren Entfernungsschwelle (E1) und dem Überschreiten der zweiten vorgebbaren Entfernungsschwelle (E2) eine vorgebbare Zeitdauer überschritten wurde.

4. Suchgerät (10) nach einem der vorhergehenden Ansprüche,
**dadurch gekennzeichnet,**
**dass** die Verarbeitungsvorrichtung (16) ausgelegt ist, ein Entfernen des Suchgeräts (10) vom aktuell zur Suche ausgewählten Sender (A) dann festzustellen, wenn beim Entfernen des Suchgeräts (10) vom aktuell zur Suche ausgewählten Sender (A) weiterhin ein vorgebbarer Distanzschwellwert einer am Stück zurückzulegenden Distanz weg vom aktuell zur Suche ausgewählten Sender (A) überschritten wird.

5. Suchgerät (10) nach einem der vorhergehenden Ansprüche,
**dadurch gekennzeichnet,**
**dass** das Suchgerät (10) ausgelegt ist, den Ort des aktuell zur Suche ausgewählten Senders (A) relativ zum Suchgerät (10) zu ermitteln, wobei die Verarbeitungsvorrichtung (16) ausgelegt ist, die Entfernung des Suchgeräts (10) von der senkrechten Projektion des aktuell zur Suche ausgewählten Senders (A) auf eine Oberfläche, insbesondere eine Schneeoberfläche, zu ermitteln.

6. Suchgerät (10) nach einem der vorhergehenden Ansprüche,
**dadurch gekennzeichnet,**
**dass** die Verarbeitungsvorrichtung (16) ausgelegt ist, während der Initiierung der Umschaltung auf einen anderen Sender (B) die Umschaltung auf den anderen Sender (B) automatisch vorzunehmen.

7. Suchgerät (10) nach Anspruch 6,
**dadurch gekennzeichnet,**
**dass** die Verarbeitungsvorrichtung (16) weiterhin ausgelegt ist, während der Initiierung der Umschaltung auf den anderen Sender (B) den aktuell zur Suche ausgewählten Sender (A) als gefunden zu markieren.

8. Suchgerät (10) nach einem der Ansprüche 6 oder 7,
**dadurch gekennzeichnet,**
**dass** die Verarbeitungsvorrichtung (16) weiterhin ausgelegt ist, während der Initiierung der Umschaltung auf den anderen Sender (B) die mit der Signalisierungsvorrichtung (18) abgegebene Information zur Unterstützung der Suche auf den anderen Sender (B) umzuschalten.

9. Suchgerät (10) nach einem der Ansprüche 1 bis 5,
**dadurch gekennzeichnet,**
**dass** die Verarbeitungsvorrichtung (16) ausgelegt ist, eine manuelle Umschaltung durch den Suchenden durch Abgabe eines entsprechenden Hinweises durch die Signalisierungsvorrichtung (18) zu initiieren.

10. Suchgerät (10) nach Anspruch 9,
**dadurch gekennzeichnet,**
**dass** der Hinweis darin besteht, dass die Signalisierungsvorrichtung (18) eine Aufforderung zur manuellen Umschaltung durch den Suchenden abgibt.

11. Suchgerät (10) nach Anspruch 10,
**dadurch gekennzeichnet,**
**dass** die Verarbeitungsvorrichtung (16) ausgelegt ist, bei Bestätigung der Aufforderung durch den Suchenden:
- den aktuell zur Suche ausgewählten Sender (A) als gefunden zu markieren; und/oder
- die von der Signalisierungsvorrichtung (18) abgegebene Information zur Unterstützung der Suche auf einen anderen Sender (B) umzuschalten.

12. Suchgerät (10) nach einem der Ansprüche 10 oder 11,
**dadurch gekennzeichnet,**
**dass** die Verarbeitungsvorrichtung (16) ausgelegt ist, bei Ablehnung der Aufforderung durch den Suchenden keine Umschaltung auf einen anderen Sender (B) vorzunehmen.

13. Suchgerät (10) nach einem der vorhergehenden Ansprüche,
**dadurch gekennzeichnet,**
**dass** die von der Signalisierungsvorrichtung (18) abgegebene Information die Entfernung des Suchgeräts (10) zum aktuell zur Suche ausgewählten Sender (A) und/oder die Richtung zum aktuell zur Suche ausgewählten Sender (A) umfasst.

14. Suchgerät (10) nach einem der vorhergehenden Ansprüche,
**dadurch gekennzeichnet,**
**dass** in der Verarbeitungsvorrichtung (16) eine Reihenfolge von Sendern (A, B) abgelegt ist, wobei die Verarbeitungsvorrichtung (16) ausgelegt ist, bei einem Umschalten auf einen anderen Sender (B) auf den nächsten Sender (B) der Reihenfolge von Sendern (A, B) umzuschalten.

15. Suchgerät (10) nach Anspruch 14,
**dadurch gekennzeichnet,**
**dass** die Verarbeitungsvorrichtung (16) ausgelegt ist, eine Reihenfolge von Sendern (A, B) festzulegen, insbesondere in Abhängigkeit der Entfernung der jeweiligen Sender (A, B) vom Suchgerät (10) und/oder von der Empfangsfeldstärke des vom jeweiligen Sender (A, B) ausgesendeten Sendesignals.

16. Suchgerät (10) nach einem der vorhergehenden Ansprüche,
**dadurch gekennzeichnet,**
**dass** die Signalisierungsvorrichtung (18) ausgelegt ist, die jeweilige Information optisch, akustisch und/oder haptisch abzugeben.

17. Verfahren zum Betreiben eines Suchgeräts (10), insbesondere eines Lawinen-Verschütteten-Suchgeräts, mit einer Empfangsvorrichtung (12), die mindestens eine Suchantenne (14) zum Empfangen mindestens eines ersten Sendesignals eines ersten Senders (A) und eines zweiten Sendesignals eines zweiten Senders (B) umfasst, wobei sich das erste und das zweite Sendesignal in mindestens einem signalbestimmenden Parameter voneinander unterscheiden; einer Verarbeitungsvorrichtung (16), die mit der Empfangsvorrichtung (12) gekoppelt und ausgelegt ist, durch Auswertung des mindestens einen signalbestimmenden Parameters das erste Sendesignal dem ersten Sender (A) und das zweite Sendesignal dem zweiten Sender (B) zuzuordnen, wobei die Verarbeitungsvorrichtung (16) weiterhin ausgelegt ist, eine Entfernung zwischen dem Suchgerät (10) und mindestens einem der Sender zu ermitteln; und einer Signalisierungsvorrichtung (18), die mit der Verarbeitungsvorrichtung (16) gekoppelt und ausgelegt ist, Information zur Unterstützung der Suche zumindest eines aktuell zur Suche ausgewählten Senders (A) abzugeben; **gekennzeichnet durch** folgende Schritte:
a) Prüfen, ob sich das Suchgerät (10) vom aktuell zur Suche ausgewählten Sender (A) entfernt; und
b) falls die Prüfung in Schritt a) bejaht wird:
zumindest Initiieren einer Umschaltung auf einen anderen Sender (B) als aktuell zur Suche ausgewählten Sender (A).

## Claims

1. Detector (10), in particular avalanche victim detector, comprising
- a receiving device (12) including at least one search antenna (14) for receiving at least a first transmit signal of a first transmitter (A) and a second transmit signal of a second transmitter (B), wherein the first and the second transmit signal differ from each other in at least one signal determining parameter;
- a processing device (16), which is coupled to the receiving device (12) and adapted to associate the first transmit signal with the first transmitter (A) and the second transmit signal with the second transmitter (B) by evaluation of the at least one signal determining parameter, wherein the processing device (16) is further adapted to ascertain a range between the detector (10) and at least one of the transmitters; and
- a signaling device (18), which is coupled to the processing device (16) and adapted to output information for assisting the search of at least one transmitter (A) currently selected for search;
**characterized in that**
the processing device (16) is adapted to examine if the detector (10) departs from the transmitter (A) currently selected for search;
wherein the processing device (16) is further adapted to initiate switching to a transmitter (B) other than the transmitter (A) currently selected for search at least if this examination turns out positive.

2. Detector (10) according to claim 1,
**characterized in that**
the processing device (16) is further adapted to determine departure of the detector (10) from the transmitter (A) currently selected for search if the ascertained range has first fallen below a first presettable range threshold (E1) and thereafter has exceeded a second presettable range threshold (E2).

3. Detector (10) according to claim 2,
**characterized in that**
the processing device (16) is adapted to determine departure of the detector (10) from the transmitter (A) currently selected for search only if a presettable period of time was exceeded between falling below the first presettable range threshold (E1) and exceeding the second presettable range threshold (E2).

4. Detector (10) according to any one of the preceding claims,
**characterized in that**
the processing device (16) is adapted to determine departure of the detector (10) from the transmitter (A) currently selected for search if a presettable distance threshold value of a distance to be traveled at a time away from the transmitter (A) currently selected for search is further exceeded upon departure of the detector (10) from the transmitter (A) currently selected for search.

5. Detector (10) according to any one of the preceding claims,
**characterized in that**
the detector (10) is adapted to ascertain the location of the transmitter (A) currently selected for search relative to the detector (10), wherein the processing device (16) is adapted to ascertain the range of the detector (10) from the perpendicular projection of the transmitter (A) currently selected for search to a surface, in particular a snow surface.

6. Detector (10) according to any one of the preceding claims,
**characterized in that**
the processing device (16) is adapted during initiation of switching to another transmitter (B) to automatically perform switching to the other transmitter (B).

7. Detector (10) according to claim 6,
**characterized in that**
the processing device (16) is further adapted to mark the transmitter (A) currently selected for search as found during initiation of switching to the other transmitter (B).

8. Detector (10) according to any one of claims 6 or 7,
**characterized in that**
the processing device (16) is further adapted to switch the information for assisting the search output by the signaling device (18) to the other transmitter (B) during initiation of switching to the other transmitter (B).

9. Detector (10) according to any one of claims 1 to 5,
**characterized in that**
the processing device (16) is adapted to initiate manual switching by the searcher by output of a corresponding indication by the signaling device (18).

10. Detector (10) according to claim 9,
**characterized in that**
the indication is **in that** the signaling device (18) outputs a request to manually switching by the searcher.

11. Detector (10) according to claim 10,
**characterized in that**
the processing device (16) is adapted upon confirmation of the request by the searcher, to:
- mark the transmitter (A) currently selected for search as found; and/or
- switch the information for assisting the search output by the signaling device (18) to another transmitter (B).

12. Detector (10) according to any one of claims 10 or 11,
**characterized in that**
the processing device (16) is adapted not to perform switching to another transmitter (B) upon denial of the request by the searcher.

13. Detector (10) according to any one of the preceding claims,
**characterized in that**
the information output by the signaling device (18) includes the range of the detector (10) to the transmitter (A) currently selected for search and/or the direction to the transmitter (A) currently selected for search.

14. Detector (10) according to any one of the preceding claims,
**characterized in that**
an order of transmitters (A, B) is stored in the processing device (16), wherein the processing device (16) adapted to switch to the next transmitter (B) of the order of transmitters (A, B) upon switching to another transmitter (B).

15. Detector (10) according to claim 14,
**characterized in that**
the processing device (16) is adapted to set an order of transmitters (A, B), in particular depending on the range of the respective transmitters (A, B) from the detector (10) and/or on the received field strength of the transmit signal emitted by the respective transmitter (A, B).

16. Detector (10) according to any one of the preceding claims,
**characterized in that**
the signaling device (18) is adapted to optically, acoustically and/or haptically output the respective information.

17. Method for operating a detector (10), in particular an avalanche victim detector, comprising a receiving device (12) including at least one search antenna (14) for receiving at least a first transmit signal of a first transmitter (A) and a second transmit signal of a second transmitter (B), wherein the first and the second transmit signal differ from each other in at least one signal determining parameter; a processing device (16), which is coupled to the receiving device (12) and adapted to associate the first transmit signal with the first transmitter (A) and the second transmit signal with the second transmitter (B) by evaluation of the at least one signal determining parameter, wherein the processing device (16) is further adapted to ascertain a range between the detector (10) and at least one of the transmitters; and a signaling device (18), which is coupled to the processing device (16) and adapted to output information for assisting the search of at least one transmitter (A) currently selected for search;
**characterized by** the following steps of:
a) examining if the detector (10) departs from the transmitter (A) currently selected for search; and
b) if the examination in step a) is affirmed:
at least initiating switching to a transmitter (B) other than the transmitter (A) currently selected for search.

## Revendications

1. Appareil de détection (10), en particulier appareil de détection de victimes d'avalanche, avec
- un appareil de réception (12), qui comprend au moins une antenne de recherche (14), destinée à recevoir au moins un premier signal d'émission d'un premier émetteur (A) et un second signal d'émission d'un second émetteur (B), le premier et le second signal d'émission se différenciant l'un de l'autre dans au moins un paramètre déterminant le signal ;
- un appareil de traitement (16), qui est couplé à l'appareil de réception (12) et conçu pour affecter, par analyse du au moins un paramètre déterminant le signal, le premier signal d'émission au premier émetteur (A) et le second signal d'émission au second émetteur (B), l'appareil de traitement (16) étant conçu en outre pour déterminer un éloignement entre l'appareil de détection (10) et au moins l'un des émetteurs et
- un appareil de signalisation (18), qui est couplé à l'appareil de traitement (16) et conçu pour délivrer l'information relative à l'assistance à la recherche au moins d'un émetteur (A), sélectionné actuellement en vue de la recherche ;
**caractérisé en ce**
**que** l'appareil de traitement (16) est conçu pour vérifier si l'appareil de détection (10) s'éloigne de l'émetteur (A), sélectionné actuellement en vue de la recherche ;
l'appareil de traitement (16) étant conçu en outre pour initier au moins un basculement sur un émetteur (B), autre que l'émetteur (A), sélectionné actuellement en vue de la recherche, si cette vérification s'avère positive.

2. Appareil de détection (10) selon la revendication 1,
**caractérisé en ce**
**que** l'appareil de traitement (16) est conçu en outre pour constater alors un éloignement de l'appareil de détection (10) de l'émetteur (A), sélectionné actuellement en vue de la recherche, si l'éloignement déterminé est tout d'abord inférieur à un premier seul d'éloignement (E1), pouvant être prédéfini et ensuite supérieur à un second seuil d'éloignement (E2), pouvant être prédéfini.

3. Appareil de détection (10) selon la revendication 2,
**caractérisé en ce**
**que** l'appareil de traitement (16) est conçu pour ne constater un éloignement de l'appareil de détection (10) de l'émetteur (A), sélectionné actuellement en vue de la recherche, que si une durée, pouvant être prédéfinie, a été dépassée entre le sous-dépassement du premier seuil d'éloignement (E1), pouvant être prédéfini et le dépassement du second seuil d'éloignement (E2), pouvant être prédéfini.

4. Appareil de détection (10) selon l'une des revendications précédentes,
**caractérisé en ce**
**que** l'appareil de traitement (16) est conçu pour constater un éloignement de l'appareil de détection (10) de l'émetteur (A), sélectionné actuellement en vue de la recherche, si, lors de l'éloignement de l'appareil de détection (10) de l'émetteur (A), sélectionné actuellement en vue de la recherche, une valeur seuil, pouvant être prédéfinie, d'une distance, à parcourir en une seule fois, loin de l'émetteur (A), sélectionné actuellement en vue de la recherche, est en outre dépassée.

5. Appareil de détection (10) selon l'une des revendications précédentes,
**caractérisé en ce**
**que** l'appareil de détection (10) est conçu pour déterminer l'emplacement de l'émetteur (A), sélectionné actuellement en vue de la recherche, par rapport à l'appareil de détection (10), l'appareil de traitement (16) étant conçu pour déterminer l'éloignement de l'appareil de détection (10) de la projection verticale de l'émetteur (A), sélectionné actuellement en vue de la recherche, sur une surface, en particulier une surface enneigée.

6. Appareil de détection (10) selon l'une des revendications précédentes,
**caractérisé en ce**
**que** l'appareil de traitement (16) est conçu pour procéder automatiquement, pendant l'initiation du basculement sur un autre émetteur (B), au basculement sur l'autre émetteur (B).

7. Appareil de détection (10) selon la revendication 6,
**caractérisé en ce**
**que** l'appareil de traitement (16) est conçu en outre pour marquer comme trouvé, pendant l'initiation du basculement sur l'autre émetteur (B), l'émetteur (A), sélectionné actuellement en vue de la recherche.

8. Appareil de détection (10) selon l'une des revendications 6 ou 7,
**caractérisé en ce**
**que** l'appareil de traitement (16) est conçu en outre pour basculer sur l'autre émetteur (B), pendant l'initiation du basculement sur l'autre émetteur (B), l'information, délivrée avec l'appareil de signalisation (18), destinée à l'assistance à la recherche.

9. Appareil de détection (10) selon l'une des revendications 1 à 5,
**caractérisé en ce**
**que** l'appareil de traitement (16) est conçu pour initier un basculement manuel par l'auteur de la recherche, par délivrance d'une indication correspondance par l'appareil de signalisation (18).

10. Appareil de détection (10) selon la revendication 9,
**caractérisé en ce**
**que** l'indication consiste **en ce que** l'appareil de signalisation (18) délivre une invitation au basculement manuel par l'auteur de la recherche.

11. Appareil de détection (10) selon la revendication 10,
**caractérisé en ce**
**que** l'appareil de traitement (16) est conçu, lors de la confirmation de l'invitation par l'auteur de la recherche :
- pour marquer comme trouvé l'émetteur (A), sélectionné actuellement en vue de la recherche et / ou
- pour basculer sur un autre émetteur (B) l'information, délivrée par l'appareil de signalisation (18), destinée à l'assistance à la recherche.

12. Appareil de détection (10) selon l'une des revendications 10 ou 11,
**caractérisé en ce**
**que** l'appareil de traitement (16) est conçu pour n'entreprendre, en cas de refus de l'invitation par l'auteur de la recherche, aucun basculement sur un autre émetteur (B).

13. Appareil de détection (10) selon l'une des revendications précédentes,
**caractérisé en ce**
**que** l'information, délivrée par l'appareil de signalisation (18), comprend l'éloignement de l'appareil de détection (10) par rapport à l'émetteur (A), sélectionné actuellement en vue de la recherche et / ou la direction par rapport à l'émetteur (A), sélectionné actuellement en vue de la recherche.

14. Appareil de détection (10) selon l'une des revendications précédentes,
**caractérisé en ce**
**que**, dans l'appareil de traitement (16), une série d'émetteurs (A, B) est placée, l'appareil de traitement (16) étant conçu pour basculer, lors d'un basculement sur un autre émetteur (B), sur l'émetteur (B) suivant de la série d'émetteurs (A, B).

15. Appareil de détection (10) selon la revendication 14,
**caractérisé en ce**
**que** l'appareil de traitement (16) est conçu pour définir une série d'émetteurs (A, B), en particulier en fonction de l'éloignement des émetteurs (A, B) respectifs de l'appareil de détection (10) et / ou de l'intensité du champ reçu du signal d'émission, émis par l'émetteur (A, B) respectif.

16. Appareil de détection (10) selon l'une des revendications précédentes,
**caractérisé en ce**
**que** l'appareil de signalisation (18) est conçu pour délivrer l'information respective optiquement, acoustiquement et / ou haptiquement.

17. Procédé d'exploitation d'un appareil de détection (10), en particulier d'un appareil de détection de victimes d'avalanche, avec un appareil de réception (12), qui comprend au moins une antenne de recherche (14), destinée à recevoir au moins un premier signal d'émission d'un premier émetteur (A) et un second signal d'émission d'un second émetteur (B), le premier et le second signal d'émission se différenciant l'un de l'autre dans au moins un paramètre déterminant le signal ; un appareil de traitement (16), qui est couplé à l'appareil de réception (12) et conçu pour affecter, par analyse du au moins un paramètre déterminant le signal, le premier signal d'émission au premier émetteur (A) et le second signal d'émission au second émetteur (B), l'appareil de traitement (16) étant conçu en outre pour déterminer un éloignement entre l'appareil de détection (10) et au moins l'un des émetteurs et un appareil de signalisation (18), qui est couplé à l'appareil de traitement (16) et conçu pour délivrer l'information relative à l'assistance à la recherche au moins d'un émetteur (A), sélectionné actuellement en vue de la recherche ;
**caractérisé par** les étapes suivantes, consistant à
a) vérifier si l'appareil de détection (10) s'éloigne de l'émetteur (A), sélectionné actuellement en vue de la recherche ;
b) s'il est répondu par l'affirmative à la vérification au cours de l'étape a) :
initiation au moins d'un basculement sur un émetteur (B), autre que l'émetteur (A), sélectionné actuellement en vue de la recherche.
